# EUROPÄISCHE PATENTANMELDUNG

(11) **EP 3 767 769 A1**
(43) Veröffentlichungstag der Anmeldung: **20.01.2021**
(21) Anmeldenummer: 20179023.5
(22) Anmeldetag: 09.06.2020
(51) Int. Cl.: H02J 1/00, B66F 9/20, F16L 11/127

(54) **ANORDNUNG ZUM ÜBERTRAGEN ELEKTRISCHER LEISTUNG AN EINER ARBEITSMASCHINE SOWIE ARBEITSMASCHINE**

(30) Priorität: 16.07.2019 DE 202019103917 U
(71) Anmelder: Liebherr-Werk Telfs GmbH, 6410 Telfs (AT)
(72) Erfinder: Falbesoner, Florian, 6465 Nassereith (AT); Nairz, Alwin, 6105 Leutasch (AT); Lindenthaler, David, 6408 Pettnau (AT)
(74) Vertreter: Laufhütte, Dieter

(57) **Zusammenfassung**

Die Erfindung betrifft eine Anordnung zum Übertragen elektrischer Leistung an eine Arbeitsmaschine, mit wenigstens einer Hydraulikschlauchleitung eines Hydraulickreises der Arbeitsmaschine, deren Schlauchmaterial wenigstens einen integralen elektrischen Leiter und/oder ein eingebrachtes Metallgewebe aufweist. Erfindungsgemäß ist wenigstens ein Einstrich sowie Ausspeisemittel zum Ein- und Ausspeisen elektrischer Leistung in den Leitern bzw. das Metallgewebe vorgesehen, um die elektrische Energie für wenigstens einen elektrischen Verbraucher der Arbeitsmaschine über die Hydraulikschlauchleitung zu übertragen.

## Beschreibung

Die Erfindung betrifft eine Anordnung zum Übertragen elektrischer Leistung an einer Arbeitsmaschine mit wenigstens einer Hydraulikschlauchleitung eines Hydraulikkreises der Arbeitsmaschine, deren Schlauchmaterial wenigstens einen integralen elektrischen Leiter und/oder ein eingebrachtes Metallgewebe aufweist.

Für die Arbeitshydraulik einer Arbeitsmaschine wird Hydraulikmedium unter hohem Hydraulikdruck von einer zentral angeordneten Hydraulikpumpe zu bestimmten Anbauteilen der Arbeitsmaschine gefördert. Hierzu sind bei Umschlaggeräten, wie Bagger, Hydraulikleitungen vom Oberwagen am Teleskopausleger zum Anbaugerät am Teleskopkopf verlegt. Neben den hydraulischen Verbrauchern müssen jedoch auch elektrische Verbraucher, wie Aktoren, Ventile, Beleuchtungsmittel, etc. mit elektrischer Energie versorgt werden. Zusätzlich müssen Steuer- und Datenleitungen vorgesehen werden, um die Maschinensensorik bzw. etwaige Aktoren an die zentrale Maschinensteuerung anzubinden. Die zunehmende Verbraucher- und Sensorenanzahl lässt den notwendigen Bedarf an elektrischen Leitungen steigen, was gerade bei beengten Platzverhältnissen, insbesondere im Bereich des Auslegers, Schwierigkeiten mit sich bringen kann.

Die vorliegende Erfindung beschäftigt sich daher mit einer alternativen Lösung, um die Anzahl benötigter Versorgungsleitungen begrenzen zu können.

Gelöst wird diese Aufgabe durch eine Anordnung zum Übertragen elektrischer Leistung an einer Arbeitsmaschine gemäß den Merkmalen des Anspruchs 1 bzw. durch eine Arbeitsmaschine gemäß den Merkmalen des Anspruchs 9. Vorteilhafte Ausgestaltungen der Anordnung sind Gegenstand der abhängigen Ansprüche.

Erfindungsgemäß wird für die Anordnung vorgeschlagen, wenigstens eine Hydraulikschlauchleitung der Arbeitsmaschine für die Übertragung elektrischer Energie zur Versorgung wenigstens eines elektrischen Verbrauchers der Arbeitsmaschine zu nutzen. Hierbei wird ausgenutzt, dass üblicherweise eingesetzte Hydraulikschlauchleitungen ohnehin einen metallischen Gewebeeinsatz zur Verstärkung des Schlauchmaterials umfassen. Dieser Gewebeeinsatz erstreckt sich für gewöhnlich über die gesamte Länge der Schlauchleitung. Durch das Vorsehen wenigstens eines Einspeisemittels kann eine elektrische Verbindung zwischen einer Energiequelle und dem Metallgewebe hergestellt werden. Wenigstens ein Ausspeisemittel stellt die leitende Verbindung des Metallgewebes mit wenigstens einem elektrischen Verbraucher zur Verfügung, so dass die benötigte elektrische Leistung von der Energiequelle über die Hydraulikschlauchleitung zum Verbraucher übertragen werden kann.

Alternativ zum integralen Metallgewebe könnte in das Schlauchmaterial auch wenigstens eine dedizierte elektrische Leitung zur Leistungsübertragung eingebracht sein. Diese wird dann ebenfalls, wie vorstehend ausgeführt, mittels Ein- und Ausspeisemittel kontaktiert.

Ferner besteht die Möglichkeit, dass Metallgewebe oder etwaige integrale Leitungen auch für die Übertragung von Steuer- bzw. Informationssignalen zu nutzen. Hierfür müsste die Anordnung um zusätzliche Ein- und Ausspeisemittel, die mit Sensoren und/oder Steueranschlüssen elektrischer Aktoren bzw. Steueranschlüssen der zentralen Maschinensteuerung in Verbindung stehen, ergänzt werden.

Mittels der Anordnung kann eine Energieversorgung unterschiedlicher Verbraucher realisiert werden. Zum Beispiel ist es möglich, Beleuchtungsmittel, Ventile, etc. mit der benötigten elektrischen Leistung über die Hydraulikleitungen zu versorgen.

Bei der Übertragung elektrischer Leistung können jedoch hohe Stromstärken bzw. Spannungen auftreten. Ein Übergriff auf die Maschinenstruktur, insbesondere im Bereich der Armaturen der Hydraulikleitungen muss daher verhindert werden. Vor diesem Hintergrund ist vorzugsweise wenigstens ein Entkopplungsmittel vorgesehen, das die Armatur der Hydraulikschlauchleitung von der maschinenseitigen Anschlussstelle elektrisch isoliert.

Eine mögliche Umsetzung des Entkopplungsmittels kann durch eine Ausführung der Armatur bzw. zumindest eines Teils der Armatur aus nicht-leitendem Material realisiert sein. Gängige Armaturen sehen oftmals eine Verschraubung vor, diese mit entsprechenden Anschlussstellen der Maschinenstruktur verschraubt werden können. Von Vorteil ist es, wenn zumindest diese Verschraubung der Armatur elektrisch nicht-leitend ist. Möglich ist die Fertigung der Verschraubung oder sogar der vollständigen Armatur aus einem elektrisch nicht-leitenden Material, d.h. aus einem geeigneten Material mit sehr hohem elektrischem Widerstand. Denkbar ist es, die Armatur bzw. zumindest die Verschraubung aus Kunststoff zu fertigen. Da das Material jedoch den mechanischen Anforderungen der Arbeitshydraulik der Arbeitsmaschine gerecht werden muss, ist die Auswahl eines entsprechend robusten Materials notwendig. Die Armatur muss in der Arbeitshydraulik auftretenden hohen Spannungen, Drücken sowie Temperaturen widerstehen können. Unter Berücksichtigung dieser Vorgaben wird als mögliches Material für die Ausgestaltung der Verschraubung bzw. der Armatur Zellamid vorgeschlagen, besonders bevorzugt Zellamid 1500 X.

Alternativ zur Ausgestaltung der Verschraubung bzw. der Armatur aus nicht-leitendem Material kann die Armatur auch aus Metall bzw. einem vergleichbaren Material gefertigt sein. Die nicht-leitenden elektrische Eigenschaft wird dann durch eine geeignete isolierende Oberflächenbeschichtung der Armatur an den relevanten Stellen erreicht.

Ferner besteht eine Alternative darin, eine elektrische Entkopplung in Form eines isolierenden Adapterstückes auszuführen, das zwischen Armatur und maschinenseitiger Anschlussstelle einbringbar ist. Denkbar ist eine Ausgestaltung in Form einer Zwischenplatte, die zwischen Armatur und Maschine montierbar ist. Auch hierbei gilt, dass die Adapterplatte bzw. das Adapterstück aus einem elektrisch nicht-leitendem Material, insbesondere Kunststoff, idealerweise Zellamid bzw. Zellamid 1500 X gefertigt ist. Alternativ dazu kann das Adapterteil auch aus Metall hergestellt werden, das wiederum mit einer elektrisch nicht-leitenden Beschichtung versehen ist.

Vorstehend wurde bereits auf eine etwaige Verschraubung der Armatur verwiesen. Die Erfindung lässt sich jedoch auch für alternative Armaturen bzw. Anschlussmechanismen einsetzen. Die Erfindung ist problemlos bei sogenannten SAE-Verbindungen möglich, wobei auch hier zumindest relevante Bereiche der Armatur aus nicht-leitendem elektrischem Material wie Kunststoff gefertigt sind oder entsprechend beschichtet sind. Möglich ist auch in diesem Fall die Einbringung geeigneter Adapterstücke.

Neben der erfindungsgemäßen Anordnung betrifft die Erfindung auch eine Arbeitsmaschine mit einer Arbeitshydraulik sowie wenigstens einer Anordnung gemäß der Erfindung. Für die Arbeitsmaschine ergeben sich dieselben Vorteile und Eigenschaften wie sie bereits vorstehend anhand der Anordnung aufgezeigt wurden.

Von der Erfindung umfasst ist ebenfalls eine Hydraulikschlauchleitung, deren Schlauchmaterial mit einem integralen Metallgewebe versehen ist oder die wenigstens eine elektrische Leitung umfasst, wobei die Hydraulikschlauchleitung zudem wenigstens ein Ein- sowie Ausspeisemittel für das Ein- und Ausspeisen elektrischer Energie in das Metallgewebe bzw. den elektrischen Leiter umfasst. Die Hydraulikschlauchleitung ist weiterhin vorzugsweise mit wenigstens einer Armatur mit passendem Entkopplungsmittel ausgestaltet.

Darüber hinaus betrifft die vorliegenden Erfindung die Verwendung eines Hydraulikschlauches gemäß der Erfindung bzw. einer Anordnung gemäß der Erfindung zur Übertragung elektrischer Leistung von wenigstens einer Energiequelle zu wenigstens einem elektrischen Verbraucher.

Weitere Vorteile und Eigenschaften der Erfindung sollen nachfolgend anhand der in den Figuren dargestellten Ausführungsbeispiele näher erläutert werden.

Es zeigen:
- Figur 1:: Ein skizzierter Ausschnitt eines Auslegers der erfindungsgemäßen Arbeitsmaschine mit der erfindungsgemäßen Anordnung,
- Figur 2:: eine Detaildarstellung der endseitig montierten Armatur des Hydraulikschlauchs,
- Figur 3:: eine Detaildarstellung der Armatur der Hydraulikschlauchleitung und
- Figur 4:: eine Darstellung einer alternativen Ausführung der Armatur mit integriertem Isolationsadapter.

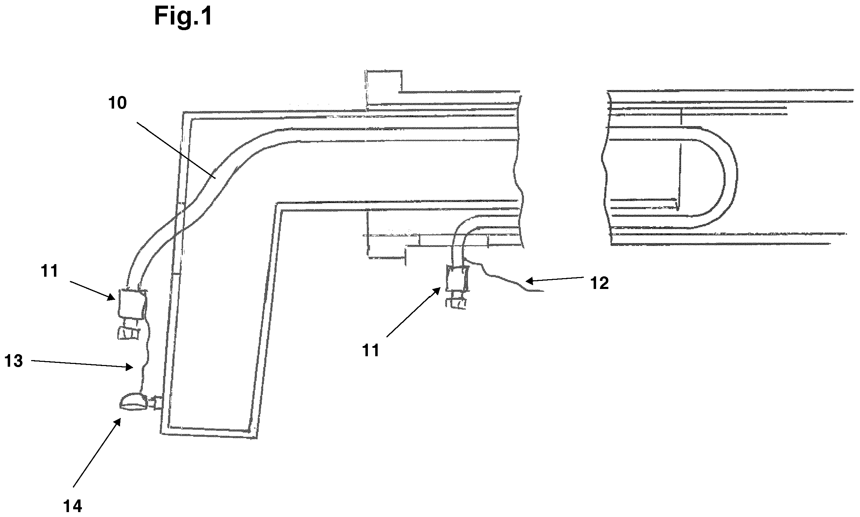

Figur 1 skizziert schematisch einen Ausschnitt eines Teleskopauslegers der erfindungsgemäßen Arbeitsmaschine. An der Seitenfläche des Auslegers ist wenigstens eine Hydraulikschlauchleitung 10 verlegt, die sich von einem Bereich nahe des Anlenkpunktes des Auslegers am Oberwagen der Arbeitsmaschine zu einem hydraulischen Verbraucher 14 erstreckt. Die Hydraulikschlauchleitung 10 weist endseitig befestigte Armaturen 11 auf, um die Schlauchleitung 10 mit den maschinenseitigen Anschlussstellen (hier nicht dargestellt) zu verbinden.

Der Schlauchmantel der Hydraulikschlauchleitung 10 ist mit einem Metallgewebe versehen, das regelmäßig zwischen zwei elektrisch nicht-leitenden Lagen des Schlauchmantels eingebettet ist und zur Verstärkung des Schlauchs 10 dient. Dieses Metallgewebe der Hydraulikschlauchleitung 10 wird nun dazu genutzt, sowohl elektrische Datensignale (Informations- und Steuersignale) als auch elektrische Energie für die Energieversorgung elektrischer Verbraucher 14 der Arbeitsmaschine zu übertragen. Eingespeist wird die elektrische Energie bspw. durch ein geeignetes Einspeisemittel 12 im Bereich der Armatur 11, mittels dieser im Bereich der Anlenkstelle des Auslegers elektrische Leistung und optional elektrische Datensignale in das Metallgewebe eingespeist werden können. Der Abgriff der elektrischen Leistung kann mittels einem Ausspeisemittels 13 im Bereich des Verbrauchers 14, hier ein Beleuchtungsmittel, abgegriffen werden. Die Ein- und Ausspeismittel 12, 13 sind hier im Bereich der endseitig montierten Armaturen 11 angeordnet, grundsätzlich kann die Ein- oder Ausspeisung aber auch an jeder beliebigen Stelle des Hydraulikschlauches 10 erfolgen.

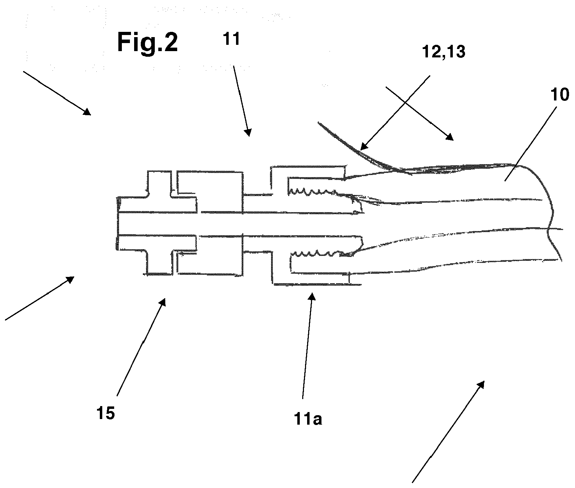

Da bei der Übertragung von elektrischer Leistung für etwaige Stellaktoren, Ventile, Beleuchtungsmittel 14 hohe Spannungen bzw. Stromstärken auftreten können, ist es wichtig, die Schlauchleitung 10 bzw. die Armaturen 11 elektrisch vom maschinenseitigen Anschluss zu entkoppeln. Ansonsten besteht die Gefahr, dass benachbarte Maschinenteile unter Strom bzw. Spannung stehen. Ein beispielhafter Aufbau für eine isolierende Armatur 11 ist der Figur 2 zu entnehmen. Hier gezeigt ist eine Armatur 11, die auf das Ende der Schlauchleitung 10 aufgesteckt und über eine spezielle Crimp-Verbindung 11a dort fixiert wird. Die hergestellte Crimp-Verbindung 11a führt dazu, dass Teile der Armatur in das Schlauchmaterial eindringen und das dortige Metallgewebe kontaktieren.

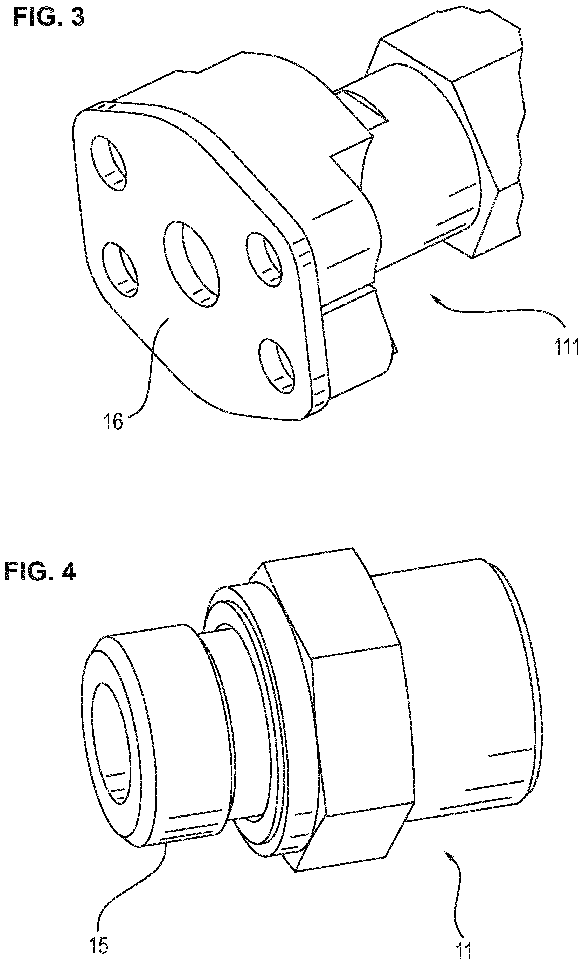

Das andere Ende der Armatur 11 ist hingegen mit einer Verschraubung 15 versehen, die zum maschinenseitigen Anschluss dient. Ein entsprechendes Gewinde mit Mutter lässt sich mit der maschinenseitigen Anschlussstelle verschrauben. Da die Armatur 11 in der Regel aus einem metallischen Werkstoff gefertigt ist, würde somit die elektrische Leistung unmittelbar auf die maschinenseitige Anschlussstelle übertragen werden. Vor diesem Hintergrund muss die Armatur 11 von der Maschine geeignet isoliert werden. Umgesetzt wird dies werden, indem die Armatur 11 zumindest teilweise, insbesondere die Verschraubung 15, aus einem nicht leitenden Material gefertigt wird. Im hier konkret gezeigten Ausführungsbeispiel (siehe Figur 4) ist die Verschraubung 15 aus Kunststoff, insbesondere Zellamid 1500 X gefertigt. Dieses Material zeichnet sich durch seine hohe Festigkeit aus und kann den im Arbeitsbetrieb auftretenden Materialspannungen, Druckschwankungen als auch Temperaturen standhalten. Alternativ dazu könnte die Armatur 11 wie gewohnt aus Metall gefertigt sein, jedoch lediglich im Bereich der Verschraubung 15 mit einer nicht-leitenden Beschichtung überzogen sein, wodurch gleichermaßen eine elektrische Entkopplung sichergestellt werden kann.

Figur 4 zeigt eine alternative Ausführungsform der Armatur 111 für eine SAE-Schnittstelle. Hier wird die elektrische Entkopplung durch Einbringen eines gesonderten Isolationsadapters 116 erreicht, der zwischen der Schnittstelle der Armatur 111 und einer hier nicht gezeigten maschinenseitigen Anschlussstelle eingebracht wird. Der Adapter 16 kann aus Kunststoff, insbesondere Zellamid 1500 X gefertigt sein oder alternativ mit einer nicht-leitenden Beschichtung überzogen sein.

## Patentansprüche

1. Anordnung zum Übertragen elektrischer Leistung an einer Arbeitsmaschine, mit wenigstens einer Hydraulikschlauchleitung eines Hydraulikkreises der Arbeitsmaschine, deren Schlauchmaterial wenigstens einen integralen elektrischen Leiter und/oder ein eingebrachtes Metallgewebe aufweist, **dadurch gekennzeichnet, dass** wenigstens ein Ein- sowie Ausspeisemittel zum Ein- und Ausspeisen elektrischer Leistung in den Leiter bzw. das Metallgewebe vorgesehen ist, um die elektrische Energie für wenigstens einen elektrischen Verbraucher der Arbeitsmaschine über die Hydraulikschlauchleitung zu übertragen.

2. Anordnung nach Anspruch 1, **dadurch gekennzeichnet, dass** weitere Ein- und Ausspeisemittel vorgesehen sind, um elektrische Steuer- oder Informationssignale über die Hydraulikschlauchleitung zu übertragen.

3. Anordnung nach Anspruch 1 oder 2, **dadurch gekennzeichnet, dass** die Hydraulikschlauchleitung endseitig wenigstens eine Armatur zum Anschluss des Hydraulikschlauchs in den Hydraulikkreis der Arbeitsmaschine umfasst, wobei wenigstens ein Entkopplungsmittel im Bereich der Armatur vorgesehen ist, um die Armatur und die Hydraulikschlauchleitung von der maschinenseitigen Anschlussstelle elektrisch zu entkoppeln.

4. Anordnung nach Anspruch 3, **dadurch gekennzeichnet, dass** die Armatur eine Verschraubung für den Anschluss an der Arbeitsmaschine aufweist und das Entkopplungsmittel durch eine elektrisch nicht-leitende Ausgestaltung der Verschraubung verwirklicht ist.

5. Anordnung nach Anspruch 4, **dadurch gekennzeichnet, dass** die Verschraubung aus einem elektrisch nicht-leitenden Material gefertigt und/oder mit einer elektrisch nicht-leitenden Beschichtung überzogen ist.

6. Anordnung nach Anspruch 4 oder 5, **dadurch gekennzeichnet, dass** zumindest die Verschraubung der Armatur aus Kunststoff gefertigt ist bzw. Kunststoff umfasst, insbesondere Zellamid, idealerweise Zellamid 1500X.

7. Anordnung nach Anspruch 3, **dadurch gekennzeichnet, dass** wenigstens ein Adapterstück vorgesehen ist, das zwischen Armatur und maschinenseitiger Anschlussstelle zur elektrischen Entkopplung einbringbar ist, vorzugsweise in Form einer Adapterplatte aus einem elektrisch nicht-leitenden Material oder in Form eines Metalladapters mit elektrisch nicht-leitender Beschichtung.

8. Hydraulikschlauchleitung für eine Anordnung nach einem der vorhergehenden Ansprüche.

9. Arbeitsmaschine mit einer Arbeitshydraulik und integrierter Anordnung gemäß einem der Ansprüche 1 bis 7.

10. Verwendung eines Hydraulikschlauches gemäß Anspruch 8 bzw. einer Anordnung gemäß einem der Ansprüche 1 bis 7 zur Übertragung elektrischer Leistung von wenigstens einer Energiequelle zu wenigstens einem elektrischen Verbraucher.
